# EUROPÄISCHE PATENTSCHRIFT

(11) **EP 0 964 011 B1**
(45) Veröffentlichungstag und Bekanntmachung des Hinweises auf die Patenterteilung: **07.01.2004**
(21) Anmeldenummer: 99110717.8
(22) Anmeldetag: 04.06.1999
(51) Int. Cl.: C08F 255/00, C08L 51/06

(54) **Polyolefin-Pfropfcopolymere**
Polyolefine graft copolymers
Copolymères greffés de polyoléfines

(30) Priorität: 12.06.1998 DE 19826345
(43) Veröffentlichungstag der Anmeldung: 15.12.1999
(73) Patentinhaber: Borealis GmbH, 2323 Schwechat-Mannswörth (AT)
(72) Erfinder: Reichelt, Norbert Dr., 4501 Neuhofen (AT); Rätzsch, Manfred Prof.Dr., 4202 Kirchschlag (AT); Heikin, Saul Dr., 190000 St. Petersburg (RU); Ivanchev, Sergej Prof.Dr., 199226 St. Petersburg (RU); Mesh, Alla Dr., 195299 St. Petersburg (RU); Födorova, Natalija Dipl.-Ing., 192286 St. Petersburg (RU)
(74) Vertreter: VA TECH Patente GmbH & Co

(56) Entgegenhaltungen:
- GB-A- 1 098 021
- US-A- 3 981 958

## Beschreibung

Die Erfindung betrifft Polyolefin-Pfropfcopolymere ohne störende Anteile an Homopolymeren aus Polyolefinen und ethylenisch ungesättigten Monomeren sowie ein Verfahren zu deren Herstellung.

Pfropfcopolymere von Polyolefinen sind bekannt.

Von Nachteil bei den üblichen Verfahren der Herstellung von Pfropfcopolymeren durch Umsetzung von Polyolefinen mit ethylenisch ungesättigten Monomeren in Gegenwart von Peroxiden in der Schmelze oder in fester Phase ist die Bildung von Homopolymeren auf Basis der ethylenisch ungesättigten Monomeren als Nebenreaktion zur Bildung der Pfropfcopolymeren. Da die gebildeten Homopolymeren überwiegend unverträglich mit der Polymermatrix der Pfropfcopolymeren sind, führt dies zu einem Abfall der Werkstoffeigenschaften der Blends Pfropfcopolymer/Homopolymer mit wachsendem Homopolymeranteil. Für anspruchsvolle Anwendungen ist eine sehr aufwendige Extraktion des Homopolymeranteils erforderlich.

So wird bei der Umsetzung von Polyethylen mit Dimethylaminoethylmethacrylat im Extruder in Gegenwart von Peroxiden die 1,5- bis 3-fache Menge an Dimethylaminoethylmethacrylat-Homopolymer gegenüber aufgepfropftem Dimethylaminoethylmethacrylat gebildet (Oliphant, K. SPE-ANTEC '94, 102-107). Bei der Pfropfung von Polypropylen mit 2 bis 8 Gew.% Acrylsäure im Extruder in Gegenwart von Benzoylperoxid und Dicumylperoxid als Radikalbildner wird die 4- bis 5-fache Menge an Acrylsäure-Homopolymer gegenüber gepfropfter Acrylsäure gebildet [ Rao. G., Eur. Polym. J. 32(1996)6, 695-700].

Störende, wenn auch geringere Anteile an Homopolymeren werden ebenfalls bei der Umsetzung von Polyolefinen in fester Phase mit ethylenisch ungesättigten Monomeren in Gegenwart von Peroxiden gebildet.

Bei der Umsetzung von Polypropylen mit Acrylsäure und Polystyren in Gegenwart von Dibenzoylperoxid liegen von der umgesetzten Acrylsäure 90% gepfropft und 10% als Polyacrylsäure-Homopolymer vor, das durch Extraktion mit Methanol abgetrennt wird ( DD 275 161, DD 266 358).

Bekannt ist weiterhin, den Homopolymeranteil bei der Festphasenpfropfung von Polyolefinen durch Vorsorption mit Monomer und Peroxid vor Erwärmung auf Reaktionstemperatur herabzusetzen [Beenen, W., Macromol.Symp. 102(1996). 255-263]

Eine Bildung von störenden Homopolymeranteilen bei der Pfropfung von ethylenisch ungesättigten Monomeren in Gegenwart von Peroxiden in der Schmelze oder in fester Phase erfolgt dagegen nicht, wenn die ethylenisch ungesättigten Monomeren unter den Bedingungen der radikalischen Pfropfcopolymerisation nicht homopolymerisierbar sind. Beispiele sind ungesättigte Dicarbonsäureanhydride wie Maleinsäureanhydrid, α-Methylstyrol, Vinylether und Vinylalkoxysilane ( EP 0 437 808, Brandrup-Immergut, Polymer Handbook, Interscience Publishers New York 1989).

Homopolymerfreie Pfropfcopolymere sind auch aus US-A-3 981 958 bekannt.

Die erfindungsgemäße Aufgabe bestand in der Entwicklung von Poly-α-olefin-Pfropfcopolymeren, die keine störenden Anteile an Homopolymeren besitzen, sowie eines Verfahrens zu deren Herstellung.

Überraschenderweise wurde gefunden, daß bei der Umsetzung von Mischungen aus Poly-α-olefinen und ethylenisch ungesättigten Monomeren in fester Phase Pfropfcopolymere ohne störende Anteile an Homopolymeren gebildet werden, wenn die Umsetzung in Gegenwart von Acetylacetonatverbindungen von Metallen der V., VI., VII. und/oder VIII. Nebengruppe durchgeführt wird.

Die erfindungsgemäße Aufgabe wurde durch Polyolefin-Pfropfcopolymere ohne störende Anteile an Homopolymeren aus
a) Poly-α-C₂-C₁₈-Olefinen bzw. Poly-α-C₂-C₁₈-Olefin-Copolymeren in Form von Pulvern, Granulaten oder Grießen mit einer Korngröße im Bereich von 0,001 bis 6 mm, bevorzugt bei 0,05 bis 1,5 mm, und
b) 0,01 bis 50 Masse%, bezogen auf die Poly-α-C₂-C₁₈-Olefine und Poly-α-C₂-C₁₈-Olefin-Copolymere, monofunktionell ethylenisch ungesättigten Monomeren vom Typ Acrylsäure, Acrylnitril, C₄-C₂₁-Acrylsäureester, Methacrylsäure, Methacrylnitril, C₅-C₂₂-Methacrylsäureester, Styrol, C₈-C₂₀-Styrolderivate, ungesättigte C₄-C₂₁-Dicarbonsäureanhydride, C₅-C₁₄-Vinylsilane, C₆-C₁₅-Acrylatsilane, Vinylpyridin, Vinyloxazolin, Isopropenyloxazolin, Vinylpyrrolidon, Amino-C₁-C₈-alkylacrylate, Amino-C₁-C₈alkylmethacrylate, C₃-C₂₀-Vinylether, Hydroxy-C₁-C₈-alkylacrylate, Hydroxy-C₁-C₈-alkylmethacrylate, α-Methylstyrol, Derivate des α-Methylstyrols, Vinylbiphenyl, Derivaten des Vinylbiphenyls oder C₂-C₂₀-α-Olefine oder deren Mischungen, und/oder
c) 0,005 bis 5 Masse%, bezogen auf die Poly-α-C₂-C₁₈-Olefine und Poly-α-C₂-C₁₈-Olefin-Copolymere, mehrfunktionell ethylenisch ungesättigten Monomeren vom Typ C₇- bis C₁₀- Divinylverbindungen, C₅- bis C₉- Allylverbindungen, C₄- bis C₁₀- Dienen, C₈-C₁₇-Acrylsäureester von mehrwertigen Alkoholen, C₉-C₂₁-Methacrylsäureester von mehrwertigen Alkoholen, C₉-C₂₂-Bismaleinimide, C₇- bis C₁₆-Diallylverbindungen oder C₉- bis C₁₂- Triallylverbindungen oder deren Mischungen, und
d) gegebenenfalls 0.01 bis 2,5 Masse% Stabilisatoren. 0,1 bis 1 Masse% Antistatika, 0,2 bis 3 Masse% Pigmenten, 0,05 bis 1 Masse% Nukleierungsmitteln, 5 bis 40 Masse% Füll- und/oder Verstärkerstoffen, 2 bis 20 Masse% Flammschutzmitteln und/ oder 0,01 bis 1 Masse% Verarbeitungshilfsmitteln, jeweils bezogen auf die Summe der Poly-α-C₂-C₁₈-Olefine und Poly-α-C₂-C₁₈-Olefin-Copolymere, gelöst,
   wobei die Herstellung der Polyolefin-Pfropfcopolymeren ohne störende Anteile an Homopolymeren durch Homogenisierung, Umsetzung und Desaktivierung der Mischungen aus Poly-α-C₂-C₁₈-Olefinen bzw. Poly-α-C₂-C₁₈-Olefin-Copolymeren und monofunktionell ethylenisch ungesättigten Monomeren und/oder mehrfunktionell ethylenisch ungesättigten Monomeren erfolgt ist,
   und die Herstellung der Polyolefin-Pfropfcopolymeren erfindungsgemäß in Gegenwart von
e) 0,05 bis 2,0 Masse%, bezogen auf die Summe der Poly-α-C₂-C₁₈-Olefine und Poly-α-C₂-C₁₈-Olefin-Copolymeren, Acetylacetonatverbindungen von Metallen der V., VI. VII. und/oder VIII. Nebengruppe,
durch Homogenisierung, Umsetzung in fester Phase bei Temperaturen von 0 bis 100°C und nachfolgender thermischer und/oder hydrolytischer Desaktivierung der Acetylacetonatverbindungen erfolgt ist.

Die Poly-α-C₂-C₁₈-Olefine und/oder Poly-α-C₂-C₁₈-Olefin-Copolymere sind bevorzugt Polypropylen-Homopolymere mit Schmelzindices von 0,2 bis 15 g/10 min bei 230°C/2,16 kg, statistische Propylen-Copolymere aus Propylen und Ethylen und/oder C₄-C₈-α-Olefinen mit Schmelzindices von 0,5 bis 20 g/10 min bei 230°C/2,16 kg , Propylen - Blockcopolymere aus Propylen und Ethylen und/oder C₄-C₈-α-Olefinen mit Schmelzindices von 0,5 bis 20 g/10 min bei 230°C/2,16 kg, statistische Propylen-Blockcopolymere aus Propylen und Ethylen und/oder C₄-C₈-α-Olefinen mit Schmelzindices von 0,5 bis 20 g/10 min bei 230°C/2,16 kg, elastomere Polypropylene mit Schmelzindices von 0,4 bis 20 g/10 min bei 230°C/2,16 kg, isotaktische Polybutene mit Schmelzindices von 0.2 bis 20 g/10 min bei 190°C/2,16 kg und/oder Poly-4-methylpenten-1-Homopolymere mit Schmelzindices von 0,4 bis 20 g/10 min bei 260°C/5kg.

Die Propylenpolymere sind bevorzugt unter Anwendung von Ziegler-Natta-Katalysatoren oder Metallocenkatalysatoren hergestellten Propylenpolymere.

Als Propylenpolymere sind weiterhin weitgehend amorphe Polypropylene oder Propylen-Copolymere mit einem Anteil an kristallinem Polypropylen bzw. kristallinem Propylen-Copolymer unter 10 Masse% , einer Schmelzenthalpie unter 40 J/g und einem Schmelzindex von 0,1 bis 40g/10 min bei 230°C/2,16 kg geeignet, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist und wobei R ein linearer oder verzweigter Alkylrest mit 2 bis 8 Kohlenstoffatomen ist.

Ebenfalls geeignet sind nichtisotaktische Polypropylene, insbesondere nichtisotaktische Propylen-Homopolymere mit einem Schmelzpunkt von 145 bis 165°C, einer Schmelzviscosität über 500000 cps bei190°C, einer Kristallisationswärme von 4 bis 10 cal/g und einem löslichen Anteil in Diethylether von 35 Masse% bis 55 Masse%.

Die monofunktionell ethylenisch ungesättigten Monomere sind insbesondere:
- Acrylsäure,
- Acrylnitril,
- C₄-C₂₁-Acrylsäureester wie Methylacrylat, Benzylacrylat oder Stearylacrylat.
- Methacrylsäure.
- Methacrylnitril,
- C₅-C₂₂-Methacrylsäureester wie Methylmethacrylat. n-Butylmethacrylat und/oder tert. Butylmethacrylat.
- Styren,
- C₈-C₂₀-Styrolderivate wie Chlorstyrol, Dimethylstyrol, Isopropenylstyrol oder p-Methylstyrol,
- ungesättigte C₄-C₂₁-Dicarbonsäureanhydride wie Fumarsäureanhydrid, Itakonsäureanhydrid, Maleinsäureanhydrid, Bicycloheptendicarbonsäureanhydrid, Citraconsäureanhydrid oder Cyclohexendicarbonsäureanhydrid,
- C₅-C₁₄-Vinylsilane wie Vinyltriethoxysilan, Vinyltriisopropoxysilan, Vinyltrimethoxysilan oder Aminoethyldiethoxyvinylsilan,
- C₆-C₁₅-Acrylatsilane wie Methacryloxypropyltrimethoxysilan, Methacryloxypropyldimethylethoxysilan, Methacryloxypropylmethyldiethoxysilan, Methacryloxypropyltriethoxysilan oder Methacryloxypropyltrimethoxysilan,
- Vinylpyridin,
- Vinyloxazolin,
- Isopropenyloxazolin,
- Vinylpyrrolidon,
- Amino-C₁-C₈-alkylacrylate wie Aminoethylacrylat. Aminoisobutylacrylat oder Aminoethylhexylacrylat,
- Amino-C₁-C₈-alkylmethacrylate wie Aminoethylmethacrylat, Aminoisobutylmethacrylat oder Aminoethylhexylmethacrylat,
   C₃-C₂₀-Vinylether wie Vinylmethylether, Vinylisobutylether, Hydroxyethylvinylether, Hydroxybutylvinylether oder Vinylstearylether,
- Hydroxy-C₁-C₈-alkylacrylate wie Hydroxyethylacrylat, Hydroxyisobutylacrylat oder Hydroxyethylhexylacrylat,
- Hydroxy-C₁-C₈-alkylmethacrylate wie Hydroxyethylmethacrylat, Hydroxyisobutylmethacrylat oder Hydroxyethylhexylmethacrylat,
- α-Methylstyren und Derivate des α-Methylstyrens,
- Vinylbiphenyl und Derivate des Vinylbiphenyls,
- C₂-C₂₀ - α-Olefine wie Ethylen, Propylen, Buten-1, Hexen-1, Octen-1, Hepten-1, Penten-1, 3-Methylbuten-1, 4-Methylpenten-1, 3-Methylpenten-1, Methylethylpenten-1, Ethylpenten-1, Ethylhexen-1 und/oder 5,6-Dimethylnorbornen.

Die mehrfunktionell ethylenisch ungesättigten Monomeren sind insbesondere :
- C₇- bis C₁₀- Divinylverbindungen wie Divinylanilin, Diethylenglycoldivinylether, Divinylpentan oder Divinylpropan,
- C₅- bis C₉- Allylverbindungen wie Allylacrylat, Allylmethacrylat, Allylmethylmaleat, Allylcyanurat oder Allylvinylether;
- C₄- bis C₁₀- Diene wie Butadien, Butadien-1-carbonsäure, Chloropren, Cyclohexadien-1,3, Cyclohexadien-1,5, Cyclopentadien, 2,3-Dimethylbutadien, 1-Ethoxybutadien, 1,4-Hexadien, 1,6-Hexadien oder 1,4-Pentadien,
- C₈-C₁₇-Acrylsäureester von mehrwertigen Alkoholen wie Ethylenglycoldiacrylat, Butylenglycoldiacrylat, Pentandioldiacrylat, Trimethylenglycoldiacrylat, Hexandioldiacrylat, Glycerintriacrylat, Trimethylolpropantriacrylat oder Pentaerythrittetraacrylat,
- C₉-C₂₁-Methacrylsäureester von mehrwertigen Alkoholen wie Ethylenglycoldimethacrylat, Butylenglycoldimethacrylat, Pentandioldimethacrylat oder Trimethylenglycoldimethacrylat, Glycerintrimethacrylat, Trimethylolpropantrimethacrylat oder Pentaerythrittetramethacrylat,
- C₉-C₂₂-Bismaleinimide wie Bismaleimidobenzen, Bismaleimidodiphenylmethan oder Bismaleimidotetramethyldiphenylmethan,
- C₇- bis C₁₆-Diallylverbindungen wie Diallylcyanurat, Diallylphthalat, Diallylcyanoethylisocyanurat, Diallylcyanamid oder Diallylmaleinat,
- C₉- bis C₁₂- Triallylverbindungen wie Triallylcitrat, Triallylcyanurat oder Triallylisocyanurat.

Mit besonderem Vorteil werden Mischungen dieser ethylenisch ungesättigten Monomere eingesetzt. Nicht homopolymerisierbare ethylenisch ungesättigte Monomere wie Maleinsäureanhydrid, α-Methylstyrol, Vinylether oder Vinylalkoxysilane können bei der Copfropfung störende Anteile an Copolymeren bilden. Die Bildung dieser störenden Anteile wird durch den Einsatz der erfindungsgemäßen Acetylacetonatverbindungen verhindert.

Besonders bevorzugt werden Methylmethacrylat, n-Butylmethacrylat und/oder tert. Butylmethacrylat als monofunktionell ethylenisch ungesättigte Monomere vom Typ C₅-C₂₂- Methacrylsäureester.

Die in den Polyolefin-Pfropfcopolymeren gegebenenfalls enthaltenen Hilfsstoffe sind 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die eingesetzten Polyolefine.

Als Stabilisatoren können in den Polyolefin-Pfropfcopolymeren gegebenenfalls bevorzugt Mischungen aus 0,01 bis 0,6 Masse% phenolischen Antioxidantien, 0,01 bis 0,6 Masse% Verarbeitungsstabilisatoren auf Basis von Phosphiten, 0,01 bis 0,6 Masse% 3-Arylbenzofuranonderivate, 0,01 bis 0,6 Masse% Hochtemperaturstabilisatoren auf Basis von Disulfiden und Thioäthern und/oder 0,01 bis 0,8 Masse% sterisch gehinderte Amine (HALS), jeweils bezogen auf die eingesetzten Polyolefine, enthalten sein.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als HALS-Verbindungen sind Bis-2,2,6,6-tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetramethyl)piperidyl)-imino] besonders geeignet.

Als Nukleierungsmittel können in den Polyolefin-Pfropfcopolymeren gegebenenfalls bevorzugt α-Nukleierungsmittel wie Talkum oder das Natriumsalz der Methylen-bis(2,4-di-tert.butylphenol)phosphorsäure oder β-Nukleierungsmittel wie Adipinsäuredianilid, Dibenzochinacridon oder N,N'-Dicyclohexyl-2,6-naphthalindicarboxamid enthalten sein.

Die in den Polyolefin-Pfropfcopolymeren gegebenenfalls enthaltenen Füllstoffe sind bevorzugt Al₂O_{3,} Al(OH)_{3,} Bariumsulfat, Calciumcarbonat, Glaskugeln, Holzmehl, Kieselerde, Mikrohohlkugeln, Ruß, Talkum und/ oder Wollastonit.

Die in den Polyolefin-Pfropfcopolymeren gegebenenfalls enthaltenen Verstärkerstoffe sind bevorzugt Aramidfasern, Cellulosefasern, Flachs, Jute, Kenaf, Glasfasern, Glasmatten, Mikrofasern aus flüssigkristallinen Polymeren und/oder Polytetrafluorethylen-Fasern.

Als Verarbeitungshilfsmittel können in den Polyolefin-Pfropfcopolymeren gegebenenfalls bevorzugt Calciumstearat, Magnesiumstearat und/oder Wachse enthalten sein.

Die Polyolefin-Pfropfcopolymere ohne störende Anteile an Homopolymeren werden nach einem Verfahren durch Homogenisierung, Umsetzung und Desaktivierung von Mischungen aus
a) Poly-α-C₂-C₁₈-Olefinen bzw. Poly-α-C₂-C₁₈-Olefin-Copolymeren in Form von Pulvern, Granulaten oder Grießen mit einer Korngröße im Bereich von 0,001 bis 6 mm. bevorzugt bei 0,05 bis 1,5 mm, und
b) 0,01 bis 50 Masse%, bezogen auf die Poly-α-C₂-C₁₈-Olefine und Poly-α-C₂-C₁₈-Olefin-Copolymere, monofunktionell ethylenisch ungesättigten Monomeren vom Typ Acrylsäure, Acrylnitril, C₄-C₂₁-Acrylsäureester, Methacrylsäure, Methacrylnitril, C₅-C₂₂-Methacrylsäureester, Styrol, C₈-C₂₀-Styrolderivate, ungesättigte C₄-C₂₁-Dicarbonsäureanhydride, C₅-C₁₄-Vinylsilane, C₆-C₁₅-Acrylatsilane, Vinylpyridin, Vinyloxazolin, Isopropenyloxazolin, Vinylpyrrolidon, Amino-C₁-C₈-alkylacrylate, Amino-C₁-C₈-alkylmethacrylate, C₃-C₂₀-Vinylether, Hydroxy-C₁-C₈-alkylacrylate, Hydroxy-C₁-C₈-alkylmethacrylate, α-Methylstyrol, Derivate des α-Methylstyrols, Vinylbiphenyl, Derivaten des Vinylbiphenyls oder C₂-C₂₀ - α-Olefine oder deren Gemische,
   und/oder
c) 0,005 bis 5 Masse%, bezogen auf die Poly-α-C₂-C₁₈-Olefine und/oder Poly-α-C₂-C₁₈-Olefin-Copolymere, mehrfunktionell ethylenisch ungesättigten Monomeren vom Typ C₇- bis C₁₀- Divinylverbindungen, C₅- bis C₉- Allylverbindungen, C₄- bis C₁₀- Dienen, C₈-C₁₇-Acrylsäureester von mehrwertigen Alkoholen, C₉-C₂₁-Methacrylsäureester von mehrwertigen Alkoholen, C₉-C₂₂-Bismaleinimide, C₇- bis C₁₆-Diallylverbindungen oder C₉- bis C₁₂- Triallylverbindungen oder deren Gemische,
   hergestellt, wobei vor und/oder nach der Umsetzung gegebenenfalls
d) 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der Poly-α-C₂-C₁₈-Olefine und/oder Poly-α-C₂-C₁₈-Olefin-Copolymere, zugesetzt werden können,
   und wobei die Homogenisierung und Umsetzung von Mischungen aus Poly-α-C₂-C₁₈-Olefinen bzw. Poly-α-C₂-C₁₈-Olefin-Copolymeren, monofunktionell ethylenisch ungesättigten Monomeren und/oder mehrfunktionell ethylenisch ungesättigten Monomeren erfindungsgemäß in Gegenwart von
e) 0,05 bis 2,0 Masse%, bezogen auf die Summe der Poly-α-C₂-C₁₈-Olefine und Poly-α-C₂-C₁₈-Olefin-Copolymere, Acetylacetonatverbindungen von Metallen der V., VI. VII. und/oder VIII Nebengruppe
in fester Phase bei Temperaturen von 0 bis 100°C, bevorzugt 35 bis 70°C, bei einer Verweilzeit von 5 bis 400 min, bevorzugt 25 bis 100 min, unter inerten Bedingungen unter vermindertem Druck und/oder in Gegenwart inerter Gase und nachfolgender thermischer und/oder hydrolytischer Desaktivierung der Acetylacetonatverbindungen in der Reaktionsmischung erfolgt.

Die bei dem erfindungsgemäßen Verfahren zur Herstellung von Polyolefin-Pfropfcopolymeren eingesetzten Acetylacetonatverbindungen von Metallen der V., VI. VII. und/ oder VIII. Nebengruppe sind bevorzugt Mangantriacetylacetonat, Chromtriacetylacetonat und/oder Eisentriacetylacetonat .

Bei dem erfindungsgemäßen Verfahren zur Herstellung von Polyolefin-Pfropfcopolymeren erfolgt die Homogenisierung der Mischungen aus Poly-α-C₂-C₁₈-Olefinen bzw. Poly-α-C₂-C₁₈-Olefin-Copolymeren in Form von Pulvern, Granulaten oder Grießen, monofunktionell ethylenisch ungesättigten Monomeren und/oder mehrfunktionell ethylenisch ungesättigten Monomeren und Acetylacetonatverbindungen von Metallen der V., VI. VII. und/oder VIII. Nebengruppe bevorzugt durch Vorsorption der ethylenisch ungesättigten Monomeren, die die Acetylacetonatverbindungen gelöst enthalten, in den Pulvern, Granulaten oder Grießen.

Geeignete Reaktoren für die Umsetzung in fester Phase sind kontinuierliche Mischer, insbesondere Schneckenförderer, oder Wirbelschichtreaktoren.

Als Inertgase zur Realisierung der inerten Bedingungen bei der Umsetzung sind Stickstoff oder Argon bevorzugt geeignet.

Die Desaktivierung der Reaktionsmischung erfolgt durch thermische Desaktivierung oder durch hydrolytische Desaktivierung unter Zusatz von Säuren oder Laugen.

Bevorzugt wird die thermische Desaktivierung oberhalb der Schmelz- bzw. Erweichungstemperaturen der Polyolefin-Pfropfcopolymeren bei Temperaturen von 140 bis 280°C und Verweilzeiten von 1,5 bis 30 min, insbesondere in kontinuierlichen Knetern wie Doppelschneckenextrudern, durchgeführt. Die Schmelze wird nachfolgend ausgetragen und in üblicher Weise granuliert.

Für die thermische Desaktivierung bei Temperaturen unterhalb der Schmelz- bzw. Erweichungstemperaturen der Polyolefin-Pfropfcopolymeren bilden Wirbelschichtreaktoren oder Schneckenförderer die geeigneten Reaktoren.

Bei einer besonders bevorzugten Variante des Verfahrens zur Herstellung von Polyolefin-Pfropfcopolymeren werden bei der Homogenisierung Mischungen aus
a) Propylen- Homo- und/oder -Copolymere als Poly-α-C₂-C₁₈-Olefinen bzw. Poly-α-C₂-C₁₈-Olefin-Copolymere und
b ) 5 bis 25 Masse% Styren und/oder Methylmethacrylat, bezogen auf a), als monofunktionell ethylenisch ungesättigten Monomere
d) 0,10 bis 0,30 Masse% Mangantriacetylacetonat, bezogen auf a), als Acetylacetonatverbindungen von Metallen der V., VI. VII. und/oder VIII. Nebengruppe
eingesetzt; die Umsetzung wird in fester Phase bei Temperaturen von 35 bis 60°C und Verweilzeiten von 25 bis 60 min und die thermische Desaktivierung in der Schmelze bei 185 bis 215°C und Verweilzeiten von 1,5 bis 4 min durchgeführt.

Die erfindungsgemäßen Polyolefin-Pfropfcopolymeren sowie Mischungen mit üblichen thermoplastischen Polymeren sind insbesondere zur Herstellung von Folien, Fasern, Platten, Beschichtungen, Rohren, Hohlkörpern, Schaumstoffen und Formteilen geeignet.

Die Erfindung wird durch nachfolgende Beispiele erläutert :

### Beispiel 1 :

In einen wassergekühlten Durchlaufmischer werden bei 15°C unter Argonantmosphäre ein pulverförmiges Polypropylen-Homopolymer (Schmelzindex von 0,2 g/10 min bei 230°C/2,16 kg, mittlerer Partikeldurchmesser 0,55 mm) mit 3,20 kg/Std. und eine 0,2% Lösung von Mangantriacetylacetonat in Styren mit 0,64 kg/Std. dosiert, die Verweilzeit der Mischung im Durchlaufmischer beträgt 120 min.
Das pulverförmige Polypropylen-Homopolymer, das Styrol und Mangantriacetylacetonat in sorbierter Form enthält, wird kontinuierlich in einen auf 40°C beheizten Durchlaufmischer überführt und bei einer Verweilzeit von 60 min umgesetzt.

Das Reaktionsprodukt wird in einen Werner&Pfleiderer-Doppelschneckenextruder, Temperaturprofil 145/175/200/210/185/175°C, unter Zusatz von 0,25 Masse% 2,6-Di-tert.butyl-4-methoxyphenol und 0,20 Masse% 5,7-Di-tert.butyl-3-(2,5-dimethylphenyl)-3H-benzofuran-2-on, jeweils bezogen auf das eingesetzte Polypropylen-Homopolymer, dosiert, aufgeschmolzen, desaktiviert, entgast, ausgetragen und granuliert.

Das resultierende Pfropfcopolymer wurde 30 h mit Methylethylketon zur Ermittlung des Homopolymergehalts an Polystyrol extrahiert. Das extrahierte Pfropfcopolymer besitzt einen durch FTIR-Spektroskopie ermittelten Gehalt an gebundenem Styrol von 15,3 Masse%. Der Gehalt an Polystyren-Homopolymer beträgt 0,4 Masse%, bezogen auf das Pfropfcopolymer.

### Beispiel 2

In einen wassergekühlten Durchlaufmischer werden bei 15°C unter Argonantmosphäre ein pulverförmiges Ethylen-Propylen-Copolymer (Ethylengehalt 3,9 Masse%. Schmelzindex von 7,2 g/10 min bei 230°C/2,16 kg, mittlerer Partikeldurchmesser 0.15 mm) mit 3,85 kg/Std. und eine 0,35% Lösung von Mangantriacetylacetonat in Methylmethacrylat/Butandioldimethacrylat 97:3 mit 0,58 kg/Std. dosiert, die Verweilzeit der Mischung im Durchlaufmischer beträgt 40 min.

Das pulverförmige Copolymer, das Methylmethacrylat, Butandioldiacrylat und Mangantriacetylacetonat in sorbierter Form enthält, wird kontinuierlich in einen auf 48°C beheizten Durchlaufmischer überführt und bei einer Verweilzeit von 40 min umgesetzt.

Das Reaktionsprodukt wird in einen Werner&Pfleiderer-Doppelschneckenextruder, Temperaturprofil 145/175/200/210/185/175 °C, unter Zusatz von 0,05 Gew.% Hydrotalcit, 0,05 Gew.% Calciumstearat, 0,35 Gew.% Talkum, 0,25 Masse% 2,6-Ditert.butyl-4-methylphenol und 0,20 Masse% 5,7-Di-tert.butyl-3-(2,5-dimethylphenyl)-3H-benzofuran-2-on, jeweils bezogen auf das eingesetzte Copolymer, dosiert, aufgeschmolzen, desaktiviert, entgast, ausgetragen und granuliert.

Das resultierende Pfropfcopolymer wurde 30 h mit Methylethylketon zur Ermittlung des Homopolymergehalts an Polymethacrylaten extrahiert. Das extrahierte Pfropfcopolymer besitzt einen durch FTIR-Spektroskopie ermittelten Gehalt an gebundenen Polymethacrylaten von 11,4 Masse%. Der Gehalt an Polymethacrylat-Homopolymer liegt unterhalb von 0,1 Masse%, bezogen auf das Pfropfcopolymer.

### Beispiel 3

In einen temperierbaren druckdichten Innenmischer werden bei 12°C unter Stickstoffatmosphäre 4,15 kg eines pulverförmigen Polybuten-1 (Dichte 0,925 g/cm³, mittlerer Partikeldurchmesser 0,75 mm) und unter einem Druck von 3 bar 1,04 kg einer 0,30% Lösung von Eisentriacetylacetonat in Vinylchlorid/Butadien 95:5 dosiert, die Verweilzeit der Mischung im Innenmischer bei 15°C beträgt 55 min. Die Temperatur des Innenmischers wird innerhalb von 15 min auf 35°C erhöht und 2.5 h bei dieser Temperatur belassen.

Das Reaktionsprodukt wird in einen Werner&Pfleiderer-Doppelschneckenextruder, Temperaturprofil 90/110/155/180/180/165°C, unter Zusatz von 0,15 Gew.% Hydrotalcit, 0,15 Gew.% Magnesiumstearat, 0,15 Masse% Bis-2,2,6,6-tetramethyl-4-piperidylsebazat, 0,10 Masse% Triphenylphosphit und 0,20 Masse% 5,7-Di-tert.butyl-3-(2,5-dimethylphenyl)-3H-benzofuran-2-on, jeweils bezogen auf das eingesetzte Polybuten-1, dosiert, aufgeschmolzen, desaktiviert, entgast, ausgetragen und granuliert.

Das resultierende Pfropfcopolymer wurde 30 h mit Tetrahydrofuran zur Ermittlung des Homopolymergehalts an Polyvinylchlorid extrahiert. Das extrahierte Pfropfcopolymer besitzt einen durch FTIR-Spektroskopie ermittelten Gehalt an gebundenen Vinylchlorid von 19,2 Masse%. Der Gehalt an Polyvinylchlorid-Homopolymer beträgt 1,3 Masse%, bezogen auf das Pfropfcopolymer.

### Beispiel 4

In einen wassergekühlten Durchlaufmischer werden bei 15°C unter Argonantmosphäre ein pulverförmiges Poly-4-methylpenten-1 (Dichte 0,815 g/cm³, Schmelzindex 3,5 g/10 min bei 260°C/5 kg, mittlerer Partikeldurchmesser 0,65 mm) mit 3,10 kg/Std. und eine 0,25% Lösung von Mangantriacetylacetonat in p-Methylstyrol mit 0,62 kg/Std. dosiert, die Verweilzeit der Mischung im Durchlaufmischer beträgt 40 min.

Das pulverförmige Poly-4-methylpenten-1, das p-Methylstyrol und Mangantriacetylacetonat in sorbierter Form enthält, wird kontinuierlich in einen auf 50°C beheizten Durchlaufmischer überführt und bei einer Verweilzeit von 40 min umgesetzt.

Das Reaktionsprodukt wird in einen Werner&Pfleiderer-Doppelschneckenextruder, Temperaturprofil 140/180/235/245/240/235°C unter Zusatz von 0,45 Masse% 5,7-Di-tert.butyl-3-(2,5-dimethylphenyl)-3H-benzofuran-2-on. bezogen auf das eingesetzte Poly-4-methylpenten-1, dosiert, aufgeschmolzen, desaktiviert, entgast, ausgetragen und granuliert.

Das resultierende Pfropfcopolymer wurde 30 h mit Methylethylketon zur Ermittlung des Homopolymergehalts an Poly-p-methylstyren extrahiert. Das extrahierte Pfropfcopolymer besitzt einen durch FTIR-Spektroskopie ermittelten Gehalt an gebundenem p-Methylstyren von 16,3 Masse%. Der Gehalt an Poly-p-methylstyren-Homopolymer beträgt 0,95 Masse%, bezogen auf das Pfropfcopolymer.

### Beispiel 5

In einen temperierbaren Innenmischer werden bei 15°C unter Argonatmosphäre 3,5 kg eines pulverförmigen heterophasigen Propylen-Ethylen-Copolymers (Schmelzindex 8,5 g/10 min bei 230°C/2,16 kg, Ethylengehalt 33 Mol%, mittlerer Partikeldurchmesser 0,75 mm) und 0,35 kg einer 0,18% Lösung von Eisentriacetylacetonat in Butylmethacrylat dosiert, die Verweilzeit der Mischung im Innenmischer bei 15°C beträgt 35 min.

Die Temperatur des Innenmischers wird innerhalb von 20 min auf 45°C erhöht und 1,5 h bei dieser Temperatur belassen.

Zur Desaktivierung des Reaktionsprodukts werden in den Innenmischer 100 ml einer 5% äthanolischen HCl-Lösung dosiert und 30 min bei 45°C intensiv durchmischt. Anschließend wird das Reaktionsprodukt im Umlufttrockenschrank 16 h bei 65°C getrocknet.

Das resultierende Pfropfcopolymer wurde 25 h mit Isopropanol zur Ermittlung des Homopolymergehalts an Polybutylmethacrylat extrahiert. Das extrahierte Pfropfcopolymer besitzt einen durch FTIR-Spektroskopie ermittelten Gehalt an gebundenem Butylmethacrylat von 8,8 Masse%. Der Gehalt an Polybutylmethacrylat -Homopolymer beträgt 0,6 Masse%, bezogen auf das Pfropfcopolymer.

### Beispiel 6

In einen wassergekühlten Durchlaufmischer werden bei 15°C unter Argon-antmosphäre ein pulverförmiges Polyethylen-Homopolymer (Dichte 0 95 g/cm³. Schmelzindex 32 g/10 min bei 190°C/2.16 kg, mittlerer Partikeldurchmesser 0.55 mm) mit 4,60 kg/Std. und eine 0,3% Lösung von Chromtriacetylacetonat in einer äquimolaren Mischung aus Methacrylnitril/Vinylmethylketon mit 0 42 kg/Std dosiert. die Verweilzeit der Mischung im Durchlaufmischer beträgt 95 min.
Das pulverförmige Polyethylen-Homopolymer, das Chromtriacetylacetonat Methacrylnitril und Vinylmethylketon in sorbierter Form enthält. wird kontinuierlich in einen auf 70°C beheizten Durchlaufmischer überfuhrt und bei einer Verweilzeit von 35 min umgesetzt.

Das Reaktionsprodukt wird in einen Werner&Pfleiderer-Doppelschneckenextruder. Temperaturprofil 100/140/175/190/165/1125°C, unter Zusatz von 0,20 Masse% 2.6-Di-tert.butyl-4-methoxyphenol und 0,15 Masse% 5,7-Di-tert.butyl-3-(2.5-dimethylphenyl)-3H-benzofuran-2-on, jeweils bezogen auf das eingesetzte Polyethylen-Homopolymer, dosiert, aufgeschmolzen, desaktiviert, entgast, ausgetragen und granuliert.

Das resultierende Pfropfcopolymer wurde 30 h mit Dimethylformamid zur Ermittlung des Homopolymergehalts an Polymethacrylnitril und Polyvinylmethylketon extrahiert. Das extrahierte Pfropfcopolymer besitzt einen durch FTIR-Spektroskopie ermittelten Gehalt an gebundenem Polymethacrylnitril von 3.9 Masse% und an Polyvinylmethylketon von 3.7 Masse% . Der Gehalt an den entsprechenden Homopolymeren beträgt insgesamt 0.4 Masse%. bezogen auf das Pfropfcopolymer.

### Vergleichsbeispiel:

In einen Werner&Pfleiderer-Doppelschneckenextruder ZSK 30, L/D=36, Temperaturprofil 145/175/220/200/230/220/185/175°C, wird unter Argonatmosphäre ein pulverförmiges Polypropylen-Homopolymer (Schmelzindex von 0,2 g/10 min bei 230°C/2,16 kg, mittlerer Partikeldurchmesser 0,55 mm), das 0,25 Masse% 2,6-Di-tert.butyl-4-methoxyphenol und 0,20 Masse% 5,7-Di-tert.butyl-3-(2,5-dimethylphenyl)-3H-benzofuran-2-on enthält, mit 6,4 kg/Std. dosiert und aufgeschmolzen. In die Zone 4 des Extruders wird eine 0,2% Lösung von Mangantriacetylacetonat in Styrol mit 1,28 kg/Std. dosiert. Nach Vacuumentgasung wird das modifizierte Polypropylen ausgetragen und granuliert.
Das resultierende Pfropfcopolymer wurde 30 h mit Methylethylketon zur Ermittlung des Homopolymergehalts an Polystyrol extrahiert. Das extrahierte Pfropfcopolymer besitzt einen durch FTIR-Spektroskopie ermittelten Gehalt an gebundenem Styren von 8,5 Masse%. Der Gehalt an Polystyren-Homopolymer beträgt 5.5 Masse%. bezogen auf das Pfropfcopolymer.

## Patentansprüche

1. Polyolefin-Pfropfcopolymere ohne störende Anteile an Homopolymeren aus
a) Poly-α-C₂-C₁₈-Olefinen bzw. Poly-α-C₂-C₁₈-Olefin-Copolymeren in Form von Pulvern, Granulaten oder Grießen mit einer Korngröße im Bereich von 0,001 bis 6 mm, bevorzugt bei 0,05 bis 1,5 mm, und
b) 0,01 bis 50 Masse%, bezogen auf die Poly-α-C₂-C₁₈-Olefine und Poly-α-C₂-C₁₈-Olefin-Copolymere, monofunktionell ethylenisch ungesättigten Monomeren vom Typ Acrylsäure, Acrylnitril, C₄-C₂₁-Acrylsäureester, Methacrylsäure, Methacrylnitril, C₅-C₂₂-Methacrytsäureester, Styrol, C₈-C₂₀-Styrolderivate, ungesättigte C₄-C₂₁-Dicarbonsäureanhydride, C₅-C₁₄-Vinylsilane, C₆-C₁₅-Acrylatsilane, Vinylpyridin, Vinyloxazolin, Isopropenyloxazolin, Vinylpyrrolidon, Amino-C₁-C₈-alkylacrylate, Amino-C₁-C₈-alkylmethacrylate, C₃-C₂₀-Vinylether, Hydroxy-C₁-C₈-alkylacrylate, Hydroxy-C₁-C₈-alkylmethacrylate, α-Methylstyrol, Derivate des α-Methylstyrols, Vinylbiphenyl, Derivaten des Vinylbiphenyls oder C₂-C₂₀-α-Olefine oder deren Mischungen,
und/oder
c) 0,005 bis 5 Masse%, bezogen auf die Poly-α-C₂-C₁₈-Olefine und Poly-α-C₂-C₁₈-Olefin-Copolymere, mehrfunktionell ethylenisch ungesättigten Monomeren vom Typ C₇- bis C₁₀- Divinylverbindungen, C₅- bis C₉- Allylverbindungen, C₄- bis C₁₀- Dienen, C₈-C₁₇-Acrylsäureester von mehrwertigen Alkoholen, C₉-C₂₁-Methacrylsäureester von mehrwertigen Alkoholen, C₉-C₂₂-Bismaleinimide, C₇- bis C₁₆-Diallylverbindungen oder C₉- bis C₁₂- Triallylverbindungen oder deren Mischungen, und
d) gegebenenfalls 0,01 bis 2,5 Masse% Stabilisatoren, 0,1 bis 1 Masse% Antistatika, 0.2 bis 3 Masse% Pigmenten, 0,05 bis 1 Masse% Nukleierungsmitteln, 5 bis 40 Masse% Füll- und/oder Verstärkerstoffen, 2 bis 20 Masse% Flammschutzmitteln und/ oder 0,01 bis 1 Masse% Verarbeitungshilfsmitteln, jeweils bezogen auf die Summe der Poly-α-C₂-C₁₈-Olefine und Poly-α-C₂-C₁₈-Olefin-Copolymere,
wobei die Herstellung der Polyolefin-Pfropfcopolymeren ohne störende Anteile an Homopolymeren durch Homogenisierung, Umsetzung und Desaktivierung der Mischungen aus Poly-α-C₂-C₁₈-Olefinen bzw. Poly-α-C₂-C₁₈-Olefin-Copolymeren und monofunktionell ethylenisch ungesättigten Monomeren und/oder mehrfunktionell ethylenisch ungesättigten Monomeren erfolgt ist,
**dadurch gekennzeichnet, daß** die Herstellung der Polyolefin-Pfropfcopolymeren in Gegenwart von
e) 0,05 bis 2,0 Masse%, bezogen auf die Summe der Poly-α-C₂-C₁₈-Olefine und Poly-α-C₂-C₁₈-Olefin-Copolymeren, Acetylacetonatverbindungen von Metallen der V., VI. VII. und/oder VIII. Nebengruppe,
durch Homogenisierung, Umsetzung in fester Phase bei Temperaturen von 0 bis 100°C und nachfolgender thermischer und/oder hydrolytischer Desaktivierung der Acetylacetonatverbindungen erfolgt ist.

2. Polyolefin-Pfropfcopolymere nach Anspruch 1, **dadurch gekennzeichnet, daß** die Poly-α-C₂-C₁₈-Olefine und/oder Poly-α-C₂-C₁₈-Olefin-Copolymere Polypropylen-Homopolymere mit Schmelzindices von 0,2 bis 15 g/10 min bei 230°C/ 2,16 kp, statistische Propylen-Copolymere aus Propylen und Ethylen und/oder C₄-C₈-α-Olefinen mit Schmelzindices von 0,5 bis 20 g/10 min bei 230°C/2,16 kp , Propylen - Blockcopolymere aus Propylen und Ethylen und/oder C₄-C₈-α-Olefinen mit Schmelzindices von 0,5 bis 20 g/10 min bei 230°C/2,16 kp, statistische Propylen-Blockcopolymere aus Propylen und Ethylen und/oder C₄-C₈-α-Olefinen mit Schmelzindices von 0,5 bis 20 g/10 min bei 230°C/2,16 kp, elastomere Polypropylene mit Schmelzindices von 0,4 bis 20 g/10 min bei 230°C/2,16 kp, isotaktische Polybutene mit Schmelzindices von 0,2 bis 20 g/10 min bei 190°C/2,16 kp und/oder Poly-4-methylpenten-1-Homopolymere mit Schmelzindices von 0,4 bis 20 g/10 min bei 260°C/5kp sind.

3. Polyolefin-Pfropfcopolymere nach einem oder mehreren der Ansprüche 1 und 2, **dadurch gekennzeichnet, daß** die monofunktionell ethylenisch ungesättigten Monomere vom Typ C₅-C₂₂-Methacrylsäureester Methylmethacrylat, n-Butylmethacrylat und/oder tert. Butylmethacrylat sind.

4. Verfahren zur Herstellung von Polyolefin-Pfropfcopolymeren ohne störende Anteile an Homopolymeren durch Homogenisierung, Umsetzung und Desaktivierung von Mischungen aus
a) Poly-α-C₂-C₁₈-Olefinen bzw. Poly-α-C₂-C₁₈-Olefin-Copolymeren in Form von Pulvern, Granulaten oder Grießen mit einer Korngröße im Bereich von 0,001 bis 6 mm, bevorzugt bei 0,05 bis 1,5 mm, und
b) 0,01 bis 50 Masse%, bezogen auf die Poly-α-C₂-C₁₈-Olefine und Poly-α-C₂-C₁₈-Olefin-Copolymere, monofunktionell ethylenisch ungesättigten Monomeren vom Typ Acrylsäure, Acrylnitril, C₄-C₂₁-Acrylsäureester, Methacrylsäure, Methacrylnitril, C₅-C₂₂-Methacrylsäureester, Styrol, C₈-C₂₀-Styrolderivate, ungesättigte C₄-C₂₁-Dicarbonsäureanhydride, C₅-C₁₄-Vinylsilane, C₆-C₁₅-Acrylatsilane, Vinylpyridin, Vinyloxazolin, Isopropenyloxazolin, Vinylpyrrolidon, Amino-C₁-C₈-alkylacrylate, Amino-C₁-C₈-alkylmethacrylate, C₃-C₂₀-Vinylether, Hydroxy-C₁-C₈-alkylacrylate, Hydroxy-C₁-C₈-alkylmethacrylate, α-Methylstyrol, Derivate des α-Methylstyrols, Vinylbiphenyl, Derivaten des Vinylbiphenyls oder C₂-C₂₀-α-Olefine oder deren Gemische. und/oder
c) 0,005 bis 5 Masse%, bezogen auf die Poly-α-C₂-C₁₈-Olefine und/oder Poly-α-C₂-C₁₈-Olefin-Copolymere, mehrfunktionell ethylenisch ungesättigten Monomeren vom Typ C₇- bis C₁₀- Divinylverbindungen, C₅- bis C₉- Allylverbindungen, C₄- bis C₁₀- Dienen, C₈-C₁₇-Acrylsäureester von mehrwertigen Alkoholen, C₉-C₂₁-Methacrylsäureester von mehrwertigen Alkoholen, C₉-C₂₂-Bismaleinimide, C₇- bis C₁₆-Diallylverbindungen oder C₉- bis C₁₂- Triallylverbindungen oder deren Gemische,
und wobei vor und/oder nach der Umsetzung gegebenenfalls
d) 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der Poly-α-C₂-C₁₈-Olefine und/oder Poly-α-C₂-C₁₈-Olefin-Copolymere, zugesetzt werden können,
**dadurch gekennzeichnet, daß** die Homogenisierung und Umsetzung von Mischungen aus Poly-α-C₂-C₁₈-Olefinen bzw. Poly-α-C₂-C₁₈-Olefin-Copolymeren, monofunktionell ethylenisch ungesättigten Monomeren und/oder mehrfunktionell ethylenisch ungesättigten Monomeren in Gegenwart von
e) 0,05 bis 2,0 Masse%, bezogen auf die Summe der Poly-α-C₂-C₁₈-Olefine und Poly-α-C₂-C₁₈-Olefin-Copolymere, Acetylacetonatverbindungen von Metallen der V., VI. VII. und/oder VIII. Nebengruppe
in fester Phase bei Temperaturen von 0 bis 100°C, bevorzugt 35 bis 70°C, bei einer Verweilzeit von 5 bis 400 min, bevorzugt 25 bis 100 min, unter inerten Bedingungen unter vermindertem Druck und/oder in Gegenwart inerter Gase unter nachfolgender thermischer und/oder hydrolytischer Desaktivierung der Acetylacetonatverbindungen in der Reaktionsmischung erfolgt.

5. Verfahren zur Herstellung von Polyolefin-Pfropfcopolymeren nach Anspruch 4 **dadurch gekennzeichnet, daß** die bei der Herstellung der Polyolefin-Pfropfcopolymeren eingesetzten Acetylacetonatverbindungen von Metallen der V., VI. VII. und/oder VIII. Nebengruppe Mangantriacetylacetonat, Chromtriacetylacetonat und/oder Eisentriacetylacetonat sind.

6. Verfahren zur Herstellung von Polyolefin-Pfropfcopolymeren nach Anspruch 4 oder 5, **dadurch gekennzeichnet, daß** die Homogenisierung der Mischungen aus Poly-α-C₂-C₁₈-Olefinen bzw. Poly-α-C₂-C₁₈-Olefin-Copolymeren in Form von Pulvern, Granulaten oder Grießen, monofunktionell ethylenisch ungesättigten Monomeren und/oder mehrfunktionell ethylenisch ungesättigten Monomeren und Acetylacetonatverbindungen von Metallen der V., VI. VII. und/oder VIII. Nebengruppe durch Vorsorption der ethylenisch ungesättigten Monomeren, die die Acetylacetonatverbindungen gelöst enthalten, in den Pulvern, Granulaten oder Grießen erfolgt.

7. Verfahren zur Herstellung von Polyolefin-Pfropfcopolymeren nach einem oder mehreren der Ansprüche 4 bis 6, **dadurch gekennzeichnet, daß** die thermische Desaktivierung der in der Reaktionsmischung enthaltenen Acetylacetonatverbindungen oberhalb der Schmelz- bzw. Erweichungstemperaturen der Polyolefin-Pfropfcopolymeren bei Temperaturen von 140 bis 280°C und Verweilzeiten von 1,5 bis 30 min, bevorzugt in kontinuierlichen Knetern, erfolgt.

8. Verfahren zur Herstellung von Polyolefin-Pfropfcopolymeren nach einem oder mehreren der Ansprüche 4 bis 7, **dadurch gekennzeichnet, daß** bei der Homogenisierung Mischungen aus
a) Propylen- Homo- und/oder -Copolymere als Poly-α-C₂-C₁₈-Olefinen bzw. Poly-α-C₂-C₁₈-Olefin-Copolymere und
b ) 5 bis 25 Masse% Styrol und/oder Methylmethacrylat, bezogen auf a), als monofunktionell ethylenisch ungesättigten Monomere
d) 0,10 bis 0,30 Masse% Mangantriacetylacetonat, bezogen auf a), als Acetylacetonatverbindungen von Metallen der V., VI. VII. und/oder VIII. Nebengruppe
eingesetzt werden, die Umsetzung in fester Phase bei Temperaturen von 35 bis 60°C und Verweilzeiten von 25 bis 60 min und die thermische Desaktivierung in der Schmelze bei 185 bis 215°C und Verweilzeiten von 1,5 bis 4 min erfolgt.

9. Verwendung von Polyolefin-Pfropfcopolymeren nach einem oder mehreren der Ansprüche 1 bis 3 sowie von Mischungen mit üblichen thermoplastischen Polymeren zur Herstellung von Folien, Fasern, Platten, Beschichtungen, Rohren, Hohlkörpern, Schaumstoffen und Formteilen.

## Claims

1. Polyolefin graft copolymers without undesired homopolymer fractions which consist of
a) poly-α-C₂-C₁₈ olefins or poly-α-C₂-C₁₈ olefin copolymers in the form of powders, granulates or grits having a particle size ranging from 0.001 to 6 mm, preferably from 0.05 to 1.5 mm, and
b) 0.01 to 50 % by weight, related to the poly-α-C₂-C₁₈ olefins and poly-α-C₂-C₁₈ olefin copolymers, of monofunctionally ethylenically unsaturated monomers of the type of acrylic acid, acrylonitrile, C₄-C₂₁ acrylic-acid esters, methacrylic acid, methacrylonitrile, C₅-C₂₂ methacylic-acid esters, styrene, C₈-C₂₀ styrene derivatives, unsaturated C₄-C₂₁ dicarboxylic acid anhydrides, C₅-C₁₄ vinyl silanes, C₆-C₁₅ acrylate silanes, vinyl pyridine, vinyl oxazoline, isopropenyl oxazoline, vinyl pyrrolidone, amino-C₁-C₈ alkylacrylates, amino-C₁-C₈ alkyl methacrylates, C₃-C₂₀ vinyl ethers, hydroxy-C₁-C₈ alkyl acrylates, hydroxy-C₁-C₈ alkyl methacrylates, α-methyl styrene, derivatives of α-methyl styrene, vinyl biphenyl, derivatives of vinyl biphenyl or C₂-C₂₀-α-olefins or mixtures thereof, and/or
c) 0.005 to 5 % by weight, related to the poly-α-C₂-C₁₈ olefins and poly-α-C₂-C₁₈ olefin copolymers, of polyfunctionally ethylenically unsaturated monomers of the type of C₇ to C₁₀ divinyl compounds, C₅ to C₉ allyl compounds, C₄ to C₁₀ dienes, C₈-C₁₇ acrylic-acid esters of polyhydroxylic alcohols, C₉-C₂₁ methacrylic-acid esters of polyhydroxylic alcohols, C₉-C₂₂ bismaleine imide, C₇ to C₁₆ diallyl compounds or C₉ to C₁₂ triallyl compounds or mixtures thereof, and
d) if required, 0.01 to 2.5 % by weight of stabilizers, 0.1 to 1 % by weight of antistatics, 0.2 to 3 % by weight of pigments, 0.05 to 1 % by weight of nucleation agents, 5 to 40 % by weight of filling and/or reinforcing agents, 2 to 20 % by weight of flameproofing agents and/or 0.01 to 1 % by weight of processing agents, each related to the sum of the poly-α-C₂-C₁₈ olefins and poly-α-C₂-C₁₈ olefin copolymers,
wherein the polyolefin graft copolymers have been prepared without undesired fractions of homopolymers by homogenization, conversion and deactivation of the mixtures of poly-α-C₂-C₁₈ olefins or poly-α-C₂-C₁₈ olefin copolymers and monofunctionally ethylenically unsaturated monomers and/or polyfunctionally ethylenically unsaturated monomers,
**characterized in that** the polyolefin graft copolymers have been prepared in the presence of
e) 0.05 to 2.0 % by weight, related to the sum of poly-α-C₂-C₁₈ olefins and poly-α-C₂-C₁₈ olefin copolymers, of acetylacetonate compounds of metals of the V^{th}, VI^{th}, VII^{th} and/or VIII^{th} subgroup
by homogenization, conversion in the solid phase at temperatures ranging from 0 to 100 °C followed by thermal and/or hydrolytic deactivation of the acetylacetonate compounds.

2. The polyolefin graft copolymers of Claim 1, wherein the poly-α-C₂-C₁₈ olefins and/or poly-α-C₂-C₁₈ olefin copolymers are polypropylene homopolymers having melt flow indices ranging from 0.2 to 15 g/10 min at 230 °C/2.16 kp, random propylene copolymers of propylene and ethylene and/or C₄-C₈-α-olefins having melt flow indices ranging from 0.5 to 20 g/10 min at 230 °C/2.16 kp, propylene block copolymers of propylene and ethylene and/or C₄-C₈-α-olefins having melt flow indices ranging from 0.5 to 20 g/10 min at 230 °C/2.16 kp, random propylene block copolymers of propylene and ethylene and/or C₄-C₈-α-olefins having melt flow indices ranging from 0.5 to 20 g/10 min at 230 °C/2.16 kp, elastomeric polypropylenes having melt flow indices ranging from 0.4 to 20 g/10 min at 230 °C/2.16 kp, isotactic polybutenes having melt flow indices ranging from 0.2 to 20 g/10 min at 190 °C/2.16 kp and/or poly-4-methylpentene-1-homopolymers having melt flow indices ranging from 0.4 to 20 g/10 min at 260 °C/5 kp.

3. The polyolefin graft copolymers of one or more of Claims 1 and 2, wherein the monofunctionally ethylenically unsaturated monomers are of the type of C₅-C₂₂ methacrylic-acid esters, methyl methacrylate, n-butylmethacrylate and/or tert.butylmethacrylate.

4. A method for the manufacture of polyolefin graft copolymers without undesired fractions of homopolymers by homogenization, conversion and deactivation of mixtures of
a) poly-α-C₂-C₁₈ olefins or poly-α-C₂-C₁₈ olefin copolymers in the form of powders, granulates or grits having a particle size ranging from 0.001 to 6 mm, preferably from 0.05 to 1.5 mm, and
b) 0.01 to 50 % by weight, related to the poly-α-C₂-C₁₈ olefins and poly-α-C₂-C₁₈ olefin copolymers, of monofunctionally ethylenically unsaturated monomers of the type of acrylic acid, acrylonitrile, C₄-C₂₁ acrylic-acid esters, methacrylic acid, methacrylonitrile, C₅-C₂₂ methacylic-acid esters, styrene, C₈-C₂₀ styrene derivatives, unsaturated C₄-C₂₁ dicarboxylic acid anhydrides, C₅-C₁₄ vinyl silanes, C₆-C₁₅ acrylate silanes, vinyl pyridine, vinyl oxazoline, isopropenyl oxazoline, vinyl pyrrolidone, amino-C₁-C₈ alkylacrylates, amino-C₁-C₈ alkyl methacrylates, C₃-C₂₀ vinyl ethers, hydroxy-C₁-C₈ alkyl acrylates, hydroxy-C₁-C₈ alkyl methacrylates, α-methyl styrene, derivatives of α-methyl styrene, vinyl biphenyl, derivatives of vinyl biphenyl or C₂-C₂₀-α-olefins or mixtures thereof, and/or
c) 0.005 to 5 % by weight, related to the poly-α-C₂-C₁₈ olefins and/or poly-α-C₂-C₁₈ olefin copolymers, of polyfunctionally ethylenically unsaturated monomers of the type of C₇ to C₁₀ divinyl compounds, C₅ to C₉ allyl compounds, C₄ to C₁₀ dienes, C₈-C₁₇ acrylic-acid esters of polyhydroxylic alcohols, C₉-C₂₁ methacrylic-acid esters of polyhydroxylic alcohols, C₉-C₂₂ bismaleine imide, C₇ to C₁₆ diallyl compounds or C₉ to C₁₂ triallyl compounds or mixtures thereof,
and wherein prior to and/or after the conversion
d) 0.01 to 2.5 % by weight of stabilizers, 0.1 to 1 % by weight of antistatics, 0.2 to 3 % by weight of pigments, 0.05 to 1 % by weight of nucleation agents, 5 to 40 % by weight of filling and/or reinforcing agents, 2 to 20 % by weight of flameproofing agents and/or 0.01 to 1 % by weight of processing agents, each related to the sum of the poly-α-C₂-C₁₈ olefins and/or poly-α-C₂-C₁₈ olefin copolymers, may be added, if required,
**characterized in that** the homogenization and conversion of mixtures of poly-α-C₂-C₁₈ olefins or poly-α-C₂-C₁₈ olefin copolymers, monofunctionally ethylenically unsaturated monomers and/or polyfunctionally ethylenically unsaturated monomers are performed in the presence of
e) 0.05 to 2.0 % by weight, related to the sum of poly-α-C₂-C₁₈ olefins and poly-α-C₂-C₁₈ olefin copolymers, of acetylacetonate compounds of metals of the V^{th}, VI^{th}, VII^{th} and/or VIII^{th} subgroup
in the solid phase at temperatures ranging from 0 to 100 °C, preferably from 35 to 70 °C, with a residence time ranging from 5 to 400 min, preferably 25 to 100 min, under inert conditions under reduced pressure and/or in the presence of inert gases by subsequent thermal and/or hydrolytic deactivation of the acetylacetonate compounds in the reaction mixture.

5. The method for the manufacture of polyolefin graft copolymers of Claim 4, wherein the acetylacetonate compounds of metals of the V^{th}, VI^{th}, VII^{th} and/or VIII^{th} subgroup which are used in the manufacture of the polyolefin graft copolymers are manganese(III) acetylacetonate, chromium(III) acetylacetonate and/or iron(III) acetylacetonate.

6. The method for the manufacture of polyolefin graft copolymers of Claim 4 or 5, wherein the homogenization of the mixtures of poly-α-C₂-C₁₈ olefins or poly-α-C₂-C₁₈ olefin copolymers in the form of powders, granulates or grits, monofunctionally ethylenically unsaturated monomers and/or polyfunctionally ethylenically unsaturated monomers and acetylacetonate compounds of metals of the V^{th}, VI^{th}, VII^{th} and/or VIII^{th} subgroup is performed in the powders, ganulates or grits by presorption of the ethylenically unsaturated monomers containing the acetylacetonate compounds in a dissolved state.

7. The method for the manufacture of polyolefin graft copolymers of one or more of Claims 4 to 6, wherein the thermal deactivation of the acetylacetonate compounds included in the reaction mixture is performed above the melting or softening temperatures of the polyolefin graft copolymers at temperatures ranging from 140 to 280 °C and with residence times ranging from 1.5 to 30 min, preferably in continuous kneading machines.

8. The method for the manufacture of polyolefin graft copolymers of one or more of Claims 4 to 7, wherein mixtures of
a) propylene homopolymers and/or propylene copolymers as poly-α-C₂-C₁₈ olefins or poly-α-C₂-C₁₈ olefin copolymers and
b) 5 to 25 % by weight of styrene and/or methylmethacrylate, related to a), as monofunctionally ethylenically unsaturated monomers
and
c) 0.10 to 0.30 % by weight of manganese(III) acetylacetonate, related to a), as acetylacetonate compounds of metals of the V^{th}, VI^{th}, VII^{th} and/or VIII^{th} subgroup
are used in the homogenization, the conversion in the solid phase is performed at temperatures ranging from 35 to 60 °C and with residence times ranging from 25 to 60 min and the thermal deactivation in the melt is performed at 185 to 215 °C and with residence times ranging from 1.5 to 4 min.

9. Use of the polyolefin graft copolymers of one or more of Claims 1 to 3 as well as of mixtures with usual thermoplastic polymers for the manufacture of sheets, fibers, plates, coatings, pipes, hollow parts, foamed plastics and moldings.

## Revendications

1. Copolymères polyoléfiniques greffés sans composantes homopolymères perturbatrices, constitués par
a) des poly-α-oléfines en C₂ - C₁₈ ou des copolymères d'α-oléfines en C₂ - C₁₈ sous la forme de poudres fines ou grossières ou encore de granulés, ayant une granulométrie dans la plage de 0,001 à 6 mm et, de préférence, de 0,05 à 1,5 mm
et
b) de 0,01 à 50 % en poids (par rapport aux poly-α-oléfines en C₂ - C₁₈ et aux copolymères d'α-oléfines en C₂ - C₁₈) de monomères éthyléniquement insaturés et monofonctionnels du type acide acrylique, acrylonitrile, ester acrylique en C₄ - C₂₁, acide méthacrylique, méthacrylonitrile, ester méthacrylique en C₅ - C₂₂, styrène, dérivés en C₈ - C₂₀ du styrène, anhydrides d'acides dicarboxyliques insaturés en C₄ - C₂₁, vinylsilane en C₅ - C₁₄, acrylate silane en C₆ - C₁₅, vinylpyridine, vinyloxazoline, isopropényloxazoline, vinylpyrrolidone, acrylate d'aminoalkyle en C₁ - C₈, méthacrylate d'aminoalkyle en C₁ - C₈, vinyle éther en C₃ - C₂₀, acrylate d'hydroxyalkyle en C₁ - C₈, méthacrylate d'hydroxyalkyle en C₁ - C₈, α-méthylstyrène, dérivés de l'α-méthylstyrène, vinylbiphényle, dérivés du vinylbiphényle, α-oléfines en C₂ - C₂₀, ou leurs mélanges
et / ou
c) de 0,005 à 5 % en poids (par rapport aux poly-α-oléfines en C₂ - C₁₈ et aux copolymères d'α-oléfines en C₂ - C₁₈) de monomères éthyléniquement insaturés et polyfonctionnels du type composés divinyliques en C₇ à C₁₀, composés allyliques en C₅ à C₉, diènes en C₄ à C₁₀, ester acrylique en C₈ - C₁₇ de polyols, ester méthacrylique en C₉ - C₂₁ de polyols, (C₉ - C₂₂) bismaléimides, composés diallyliques en C₇ à C₁₆, composés triallyliques en C₉ à C₁₂, ou leurs mélanges
et
d) le cas échéant, de 0,01 à 2,5 % en poids de stabilisants, de 0,1 à 1 % en poids d'agents antistatiques, de 0,2 à 3 % en poids de pigments, de 0,05 à 1 % en poids d'agents de nucléation, de 5 à 40 % en poids de charges ou d'agents de renforcement, de 2 à 20 % en poids d'agents ignifuges et / ou de 0,01 à 1 % en poids d'adjuvants de fabrication (tous ces pourcentages sont donnés par rapport à l'ensemble des poly-α-oléfines en C₂ - C₁₈ et des copolymères d'α-oléfines en C₂ - C₁₈),
où la fabrication des copolymères polyoléfiniques greffés sans composantes homopolymères perturbatrices s'effectue par l'homogénéisation, la conversion et la désactivation des mélanges de poly-α-oléfines en C₂ - C₁₈ ou de copolymères d'α-oléfines en C₂ - C₁₈ et des monomères éthyléniquement insaturés monofonctionnels et / ou des monomères éthyléniquement insaturés polyfonctionnels,
**caractérisés en ce que** leur fabrication se fait en présence de
e) 0,05 à 2,0 en poids (par rapport à l'ensemble des poly-α-oléfines en C₂ - C₁₈ et des copolymères d'α-oléfines en C₂ - C₁₈) de composés acétylacétonates de métaux des groupes V, VI, VII et / ou VIII,
par une homogénéisation et une conversion, en phase solide et à une température de 0 à 100 °C, suivies par une désactivation thermique et / ou hydraulique des composés acétylacétonate.

2. Copolymères polyoléfiniques greffés selon la revendication 1, **caractérisés en ce que** les poly-α-oléfines en C₂ - C₁₈ et / ou les copolymères d'α-oléfines en C₂ - C₁₈ sont des homopolymères du propylène avec un indice de fusion de 0,2 à 15 g / 10 min à 230 °C et sous 2,16 kp, des copolymères statistiques du propylène et de l'éthylène et / ou d'α-oléfines en C₄ - C₈ avec un indice de fusion de 0,5 à 20 g / 10 min à 230 °C et sous 2,16 kp, des copolymères bloc du propylène, de l'éthylène et / ou d'α-oléfines en C₄ - C₈ avec un indice de fusion de 0,5 à 20 g / 10 min à 230 °C et sous 2,16 kp, un copolymère bloc statistique du propylène, de l'éthylène et / ou d'α-oléfines en C₄ - C₈ avec un indice de fusion de 0,5 à 20 g / 10 min à 230 °C et sous 2,16 kp, un élastomère polypropylène avec un indice de fusion de 0,4 à 20 g / 10 min à 230 °C et sous 2,16 kp, des polybutènes isotactiques avec un indice de fusion de 0,2 à 20 g / 10 min à 190 °C et sous 2,16 kp et / ou des homopolymères du 4-méthylpentène-1 avec un indice de fusion de 0,4 à 20 g / 10 min à 260 °C et sous 5 kp.

3. Polymères polyoléfiniques greffés selon une des revendications 1 ou 2 ou les deux, **caractérisé en ce que** les monomères éthyléniquement insaturés et monofonctionnels du type ester méthacrylique en C₅ - C₂₂ sont le méthacrylate de méthyle, le méthacrylate de n-butyle et / ou le méthacrylate de tert.butyle.

4. Procédé de fabrication de polymères polyoléfiniques greffés sans composantes homopolymères perturbatrices par homogénéisation, conversion et désactivation d'un mélange
a) de poly-α-oléfines en C₂ - C₁₈ ou des copolymères d'α-oléfines en C₂ - C₁₈ sous la forme de poudres fines ou plus grossières ou encore de granulés, ayant une granulométrie dans la plage de 0,001 à 6 mm et, de préférence, de 0,05 à 1,5 mm
et
b) de 0,01 à 50 % en poids (par rapport aux poly-α-oléfines en C₂ - C₁₈ et aux copolymères d'α-oléfines en C₂ - C₁₈) de monomères éthyléniquement insaturés et monofonctionnels du type acide acrylique, acrylonitrile, ester acrylique en C₄ - C₂₁, acide méthacrylique, méthacrylonitrile, ester méthacrylique en C₅ - C₂₂, styrène, dérivés en C₈ - C₂₀ du styrène, anhydrides d'acides dicarboxyliques insaturés en C₄ - C₂₁, vinylsilane en C₅ - C₁₄, acrylate silane en C₆ - C₁₅, vinylpyridine, vinyloxazoline, isopropényloxazoline, vinylpyrrolidone, acrylate d'aminoalkyle en C₁ - C₈, méthacrylate d'aminoalkyle en C₁ - C₈, vinyle éther en C₃ - C₂₀, acrylate d'hydroxyalkyle en C₁ - C₈, méthacrylate d'hydroxyalkyle en C₁ - C₈, α-méthylstyrène, dérivés de l'α-méthylstyrène, vinylbiphényle, dérivés du vinylbiphényle, α-oléfine en C₂ - C₂₀, ou leurs mélanges
et / ou
c) de 0,005 à 5 % en poids (par rapport aux poly-α-oléfines en C₂ - C₁₈ et / ou aux copolymères d'α-oléfines en C₂ - C₁₈) de monomères éthyléniquement insaturés et polyfonctionnels du type composés divinyliques en C₇ à C₁₀, composés allyliques en C₅ à C₉, diènes en C₄ à C₁₀, ester acrylique en C₈ - C₁₇ de polyols, ester méthacrylique en C₉ - C₂₁ de polyols, (C₉ - C₂₂)bismaléimides, composés diallyliques en C₇ à C₁₆, composés triallyliques en C₉ à C₁₂, ou leurs mélanges,
et où, avant et / ou après la conversion on peut ajouter, le cas échéant
d) de 0,01 à 2,5 % en poids de stabilisants, de 0,1 à 1 % en poids d'agents antistatiques, de 0,2 à 3 % en poids de pigments, de 0,05 à 1 % en poids d'agents de nucléation, de 5 à 40 % en poids de charges ou d'agents de renforcement, de 2 à 20 % en poids d'agents ignifuges et / ou de 0,01 à 1 % en poids d'adjuvants de fabrication (tous ces pourcentages sont donnés par rapport à l'ensemble des poly-α-oléfines en C₂ - C₁₈ et des copolymères d'α-oléfines en C₂ - C₁₈),
**caractérisé en ce que** l'homogénéisation et la conversion des mélanges des poly-α-oléfines en C₂ - C₁₈ ou des copolymères d'α-oléfines en C₂ - C₁₈, des monomères éthyléniquement insaturés monofonctionnels et / ou des monomères éthyléniquement insaturés polyfonctionnels se fait en présence de
e) 0,05 à 2,0 en poids (par rapport à l'ensemble des poly-α-oléfines en C₂ - C₁₈ et des copolymères d'α-oléfines en C₂ - C₁₈) de composés acétylacétonates de métaux des groupes V, VI, VII et / ou VIII,
en phase solide à des températures de 0 à 100 °C et, de préférence, de 35 à 70 °C , pendant une durée de 5 à 400 min et, de préférence, de 25 à 100 min, dans des conditions inertes, sous une pression diminuée et / ou en présence de gaz inertes, ceci étant suivi par une désactivation thermique et / ou hydrolytique des composés acétylacétonate dans le mélange réactionnel.

5. Procédé de fabrication de polymères polyoléfiniques greffés selon la revendication 4, **caractérisé en ce que** les composés acétylacétonates des métaux des groupes V, VI, VII et / ou VIII utilisés pour la fabrication des copolymères oléfiniques greffés sont l'acétylacétonate de manganèse, l'acétylacétonate de chrome et / ou l'acétylacétonate de fer.

6. Procédé de fabrication de copolymères polyoléfiniques greffés selon la revendication 4 ou la revendication 5, **caractérisé en ce que** l'homogénéisation des mélanges des poly-α-oléfines en C₂ - C₁₈ ou des copolymères d'α-oléfines en C₂ - C₁₈ sous la forme de poudre fine ou grossière ou encore de granulés, des monomères éthyléniquement insaturés monofonctionnels et / ou des monomères éthyléniquement insaturés polyfonctionnels et des composés acétylacétonates de métaux des groupes V, VI, VII ou VIII se fait avec une préabsorption des monomères éthyléniquement insaturés, qui contiennent les composés acétylacétonate à l'état dissous, sur la poudre fine ou grossière ou sur les granulés.

7. Procédé de fabrication de copolymères polyoléfiniques greffés selon une ou plusieurs des revendications 4 à 6, **caractérisé en ce que** la désactivation thermique des composés acétylacétonate contenus dans le mélange réactionnel se fait au-dessus de la température de fusion ou de la température de ramollissement des copolymères polyoléfiniques greffés, en l'occurrence à des températures de 140 à 280 °C et pendant une durée de 1,5 à 30 min, de préférence dans des conditions d'un pétrissage continu.

8. Procédé de fabrication de copolymères polyoléfiniques greffés selon une ou plusieurs des revendication 4 à 7, **caractérisé en ce que**, lors de l'homogénéisation, on utilise des mélanges de
a) homo- et / ou copolymères du propylène en tant que poly-α-oléfines en C₂ - C₁₈ ou copolymères d'α-oléfines en C₂ - C₁₈,
et
b) de 5 à 25 % en poids de styrène et / ou de méthacrylate de méthyle (par rapport aux composants a) ) en tant que monomère éthyléniquement insaturé monofonctionnel,
c) de 0,10 à 0,30 % en poids de triacétylacétonate de manganèse (par rapport aux composants a) ) en tant que composé acétylacétonate des métaux des groupes V, VI, VII et / ou VIII,
la conversion se faisant en phase solide à des températures de 35 à 60 °C et pendant une durée de 25 à 60 min, et la désactivation thermique de la masse fondue se faisant à 185 - 215 °C en une durée de 1,5 à 4 min.

9. Utilisation des copolymères polyoléfiniques greffés selon une ou plusieurs des revendications 1 à 3, ainsi que de leurs mélanges avec des polymères thermoplastiques conventionnels, pour la fabrication de feuilles, de filaments, de plaques, de revêtements, de tubes, de corps creux et d'articles en mousse.
